# EUROPEAN PATENT SPECIFICATION

(11) **EP 1 256 922 B1**
(45) Date of publication and mention of the grant of the patent: **13.09.2006**
(21) Application number: 01308330.8
(22) Date of filing: 28.09.2001
(51) Int. Cl.: G09G 1/16, G09G 5/00

(54) **Display device with operation error warning system**
Anzeigevorrichtung mit Warnsystem für Betriebsfehler
Système d'avertissement détectant des erreurs dans le fonctionnement d'un dispositif d'affichage

(30) Priority: 11.05.2001 KR 2001025908
(43) Date of publication of application: 13.11.2002
(73) Proprietor: SAMSUNG ELECTRONICS CO., LTD., Suwon-si, Gyeonggi-do 442-742 (KR)
(72) Inventor: Bae, Jong-hwa, Suwon City, Kyungki-do (KR); Kim, Kook-won, Anyang City, Kyungki-do (KR)
(74) Representative: Geary, Stuart Lloyd

(56) References cited:
- EP-A- 0 665 525
- WO-A-01/24534
- US-A- 5 602 567
- US-A- 5 631 698
- US-A- 5 887 147
- US-A- 5 963 249

## Description

The present invention relates to a display device comprising an image display component, e.g. a CRT, and control circuitry for the image display component including a first, non-volatile, rewritable memory for storing control data, a second, read-only memory and processing means for controlling the image display component in dependence on control data in the first memory and to a method of operating a display device having an image display component, the method comprising detecting energising of the display device, responding to detected energising of the display device by performing a memory test and preventing energising of the image display component in the event that said memory test is failed,.

Differences occur between the screens of display devices, even when they are of the same model, due to various factors such as differences between components used, different CRT (cathode ray tube) characteristics, etc. Accordingly, a screen adjustment for each display device is performed at the beginning of the manufacturing process. During the screen adjustment, the screen size, the whiteness balance, the side pin-cushion, etc. are adjusted according to the video frequency of each display device, and optimal operation mode data taken by means of the screen adjustment is stored in an EEPROM (electrically erasable programmable read-only memory). Thus, when the display device is turned on, it is operated according to the operation mode data stored in the EEPROM.

However, when electric power is first supplied to the display device during the manufacturing process, the EEPROM may have no data or undesirable data. Furthermore, while a user uses the display device, the operation mode data may become corrupted. In these cases, if electric power is supplied to the display device, a control circuit thereof performs an incorrect operation, thereby damaging important circuits thereof.

Display devices which employ self-testing of the memory of the display device during a power-up or start-up procedure are known from US 5631698 and WO 0124534.

A display device according to the present invention is characterised in that the second memory stores reference identification information and the processing means is configured to be responsive to energising of the display device to compare the data in an identification information location in the first memory, extant on energising of the display device, with said reference identification information and, in the event that said identification data and said information do not match, prevent energising of the image display component.

Preferable, the display device is operable in a standby mode and in a run mode, and the processing means is configured to maintain the display device in said standby mode for said prevention of energising of the image display component. More preferably, said standby mode is characterised by substantially only said processing means being energised.

Preferably, the first memory is an EEPROM

Preferably, the processing means is configured to be operable, in the event that said data and said information do not match, to receive replacement control data and replacement identification information data from an source external to the display device and store said replacement data in the first memory.

Preferably, the processing means is a microcomputer (3) which includes the second memory.

A method according to the present invention is characterised in that the memory test comprises comparing data in an identification information location of a first, non-volatile, rewritable memory in the display device, which was stored contemporaneously with control data in the first memory, with reference identification information in a second, read-only memory in the display device and said test is failed if said data and said information do not match.

Preferably, the method comprising loading replacement control data and identification information into the first memory in the event that said data and said information do not match.

Preferably, the method comprises generating a warning indicating an error if said test is failed.

An embodiment of the present invention will now be described, by way of example, with reference to the accompanying drawings, in which:-
Figure 1 is a block diagram of a data set-up system for a display device according to the present invention;
Figure 2 is a flowchart illustrating the operation of the data set-up system of Figure 1 during manufacturing; and
Figure 3 is a flowchart illustrating the operation of the data set-up system of Figure 1 during the operational life of the display.

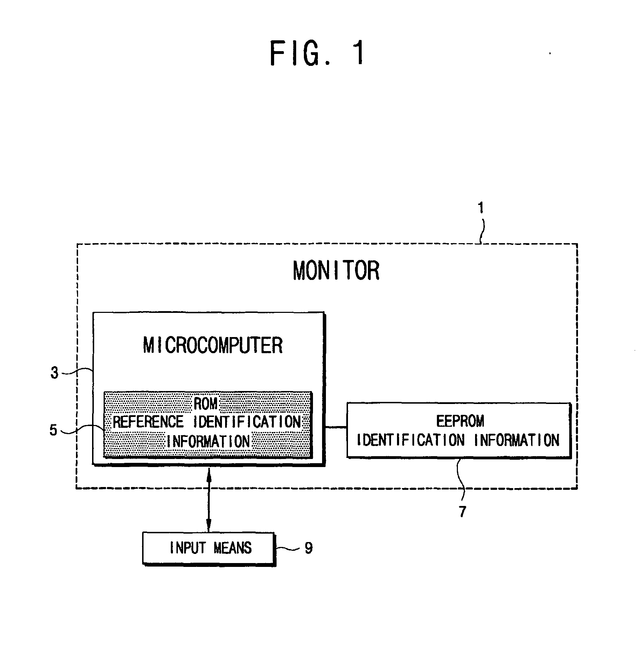

Referring to Figure 1, a data set-up system for a display device according to the present invention comprises a monitor 1, an input means 9 for the input therethrough of operation mode data for controlling the monitor 1, a microcomputer 3 controlling the whole operation of the monitor 1, and an EEPROM (electrically erasable programmable read-only memory) storing operation mode data therein.

The input means 9 includes a jig (not shown) connected to the microcomputer 3 and directly supplying data to the microcomputer 3. The input means 9 illustrated by way of example in the present embodiment uses a DDC (display data channel) transmission line not only supplying data, but also outputting a signal generated in the microcomputer 3. The microcomputer 3 of the monitor 1 can transmit data through the input means 9, and thus the engineer also can determine whether the microcomputer 3 and the monitor 1 are normal or not. The operation mode data of the monitor 1, input through the input means 9, includes screen set-up data such as a screen size, a screen position, a whiteness balance, a side pin-cushion control value, etc. according to the characteristics of the monitor 1.

The EEPROM 7 stores the operation mode data for controlling the whole monitor 1. The microcomputer 3 controls an operation of the monitor 1 according to the operation mode data stored in the EEPROM 7.

A ROM (read-only memory) 5 is an internal memory of the microcomputer 3, being capable of being read but not written to, and stores basic data for operation of the microcomputer 3.

The microcomputer 3 writes the operation mode data and predetermined identification information in the EEPROM 7. The operation mode data is input from the input means 9, and the identification information is input after the operation mode data has been written to the EEPROM. The identification information stored in the EEPROM 7 is data indicating the storage state of the operation mode data, and is used to determine whether the operation mode data is damaged or not. The identification information is generally allotted about 4 bytes in the storage area.

In the ROM 5 of the microcomputer 3 is stored reference identification information indicating the storage state of the operation mode data for the mode in which the monitor 1 is normally operated.

The microcomputer 3 controls electric power supplied to every part of the circuit. When electric power is supplied to the monitor 1, the microcomputer 3 operates in an off-mode in which the electric power is supplied to the minimum number of parts of the circuit for operating the microcomputer 3. In the off-mode, the microcomputer 3 determines whether or not the identification information in the EEPROM 7 is identical to the reference identification information in the ROM 5, and enables the supply of electric power to every part of the circuit if the identification information is the same. Then, the monitor 1 moves to a run-mode in which the microcomputer 3 operate normally.

The off-mode and the run-mode correspond to an off-mode and a run-mode of a DPMS (display power management standard), respectively. In the off-mode, remaining parts except for the minimum parts of the circuit are cut off from electric power. That is, electric power is supplied to the minimum parts of the circuit for the microcomputer 3. Conversely, in the run-mode, all parts are supplied with electric power and are normally operated.

If the identification information is not identical to the reference identification information, the microcomputer 3 determines that the operation mode data of the EEPROM 7 is corrupted, generates a warning indicating an error, and detects whether the input means 9 is connected. If the input means 9 is connected to the microcomputer 3, the operation mode data input from the outside is stored to the EEPROM 7 again. Conversely, if the input means 9 is not connected to the microcomputer 3, the error warning is continuously generated, and the microcomputer 3 maintains the off-mode until the error is removed.

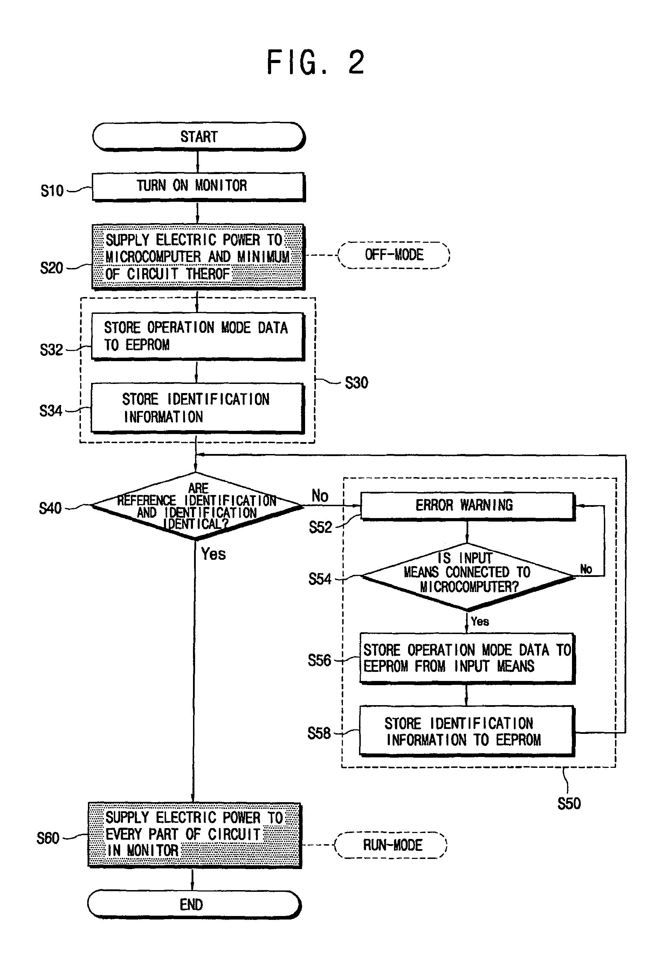

The control flow for the data set-up system during manufacturing will now be described with reference to Figure 2.

When the monitor 1 is turned on (S10), 5V power is supplied to the microcomputer 3. The microcomputer 3 controls the supply of electric power to every part of the circuit, and moves to the off-mode (S20). In the off-mode, the microcomputer 3 stores the operation mode data input through the input means 9 in the EEPROM 7 (S32). After the operation mode data is stored, the identification information is input through the input means 9 and is stored in the EEPROM 7 (S34).

The microcomputer 3 determines whether or not the reference identification information is identical to the identification information in the EEPROM 7 (S40). The reference identification information indicates the storage state of the operation mode data to normally operate the monitor 1. If the identification information is the same in each case, the microcomputer 3 supplies electric power to every part of the circuit of the monitor 1, and then the monitor 1 moves to the run-mode in which the microcomputer 3 operates normally (S60).

In the step of S40, if the reference identification information is not identical to the identification information, the off-mode is maintained because it is determined that the operation mode data of the EEPROM 7 is damaged, and then the steps S55 through S58 are performed. If the reference identification information is not identical to the identification information, the microcomputer 3 determines that the operation mode data of the EEPROM 7 is damaged and generates a warning indicating an error (S52). In order to indicate the error, an LED (light emitting diode) or a sound may be used.

At the same time, the microcomputer 3 determines whether the input means 9 is connected (S54). If the input means 9 is not connected to the microcomputer 3, the microcomputer 3 maintains the off-mode and generates the warning continuously.

Conversely, if the input means 9 is connected to the microcomputer 3, the microcomputer stores the operation mode data input from the outside in the EPPROM 7 (S56), and stores the identification information input through the input means 9 in the EEPROM 7 after storing the operation mode data therein, to thereby renew the identification information (S58). After the identification information has been stored, the microcomputer 3 moves to step S40 and controls operation of the monitor 1 according to the result of the comparison between the reference identification information and the renewal identification information.

Because Figure 2 shows an example of the data set-up system for the display device at the beginning of the manufacturing process, in step S10 wherein electric power is supplied, the EEPROM 7 is in a default state with no data stored therein. Thus, the empty EEPROM 7 needs to pass through step S30 (S32 and S34) wherein the operation mode data and the identification information are stored therein.

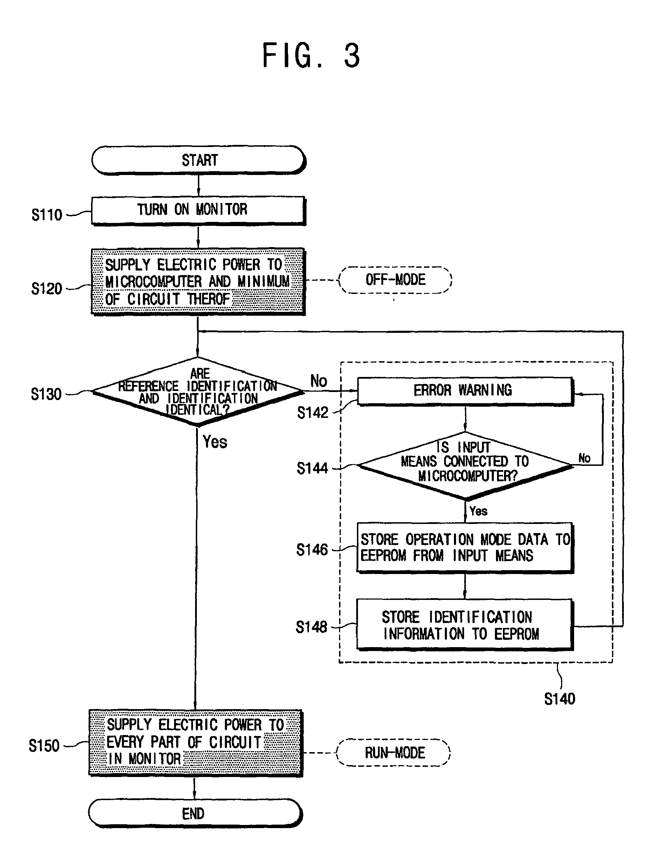

The control flow for the data set-up system during the operation life of the monitor will now be described with reference to Figure 3.

When the monitor 1 is turned on, electric power is supplied to the microcomputer 3 (S110). The microcomputer 3 controls the supply of electric power to every part of the circuit, and moves to the off-mode (S20). When a user uses the monitor 1, the microcomputer 3 determines if the identification information, which has been previously stored in the EEPROM, is identical to the reference identification information (S130). If they are the same as each other, the microcomputer 3 supplies electric power to every part of the circuit of the monitor 1 and performs the data set-up operation. Then the monitor 1 is switched from the off-mode to the run-mode (S150).

On the other hand, if the reference identification information is not identical to the identification information, the microcomputer 3 determines that the data from the EEPROM 7 has an error owing to damaged data and generates a warning (142), and determines whether or not the input means 9 is connected thereto (144). If the input means 9 is not connected to the microcomputer 3, the microcomputer 3 maintains the off-mode and continuously generates the warning. Conversely, if the input means 9 is connected to the microcomputer 3, the microcomputer stores the operation mode data input from the outside to the EEPROM 7 (S 146), and stores the identification information input through the input means 9 to the EEPROM 7 after storing the operation mode data therein (S148). After the identification information and the operation mode data are stored, the microcomputer 3 moves to the step of S130 and repeats the procedure of controlling operation of the monitor 1 according to a comparison result of the reference identification information and the renewal identification information.

The above-described control flow is an example in the case that an end user uses the monitor 1, and if the monitor 1 is in error, the step of S140 wherein data is stored in the EEPROM 7 again is performed by the manufacturer.

With this configuration, the data set-up system for the display device according to the present invention makes the monitor 1 maintain the off-mode when electric power is supplied thereto, and compares the identification information in the EEPROM 7 with the reference identification information in the ROM 5, to thereby switch from the off-mode to the run-mode. Accordingly, the circuit is prevented from breaking down due to incorrect operation as a result of the damaged data in the EEPROM 7.

As described above, the present invention provides a data set-up system for a display device and a control method thereof, which can prevent harmful operation resulting from damaged operation mode data.

## Claims

1. A display device comprising an image display component and control circuitry for the image display component including a first, non-volatile, rewritable memory (7) for storing control data, a second, read-only memory (5) and processing means (3) for controlling the image display component in dependence on control data in the first memory (7), **characterised in that** the second memory (5) stores reference identification information and the processing means (3) is configured to be responsive to energising of the display device to compare the data in an identification information location in the first memory (7), extant on energising of the display device, with said reference identification information and, in the event that said identification data and said information do not match, prevent energising of the image display component.

2. A display device according to claim 1, operable in a standby mode and a run mode, wherein the processing means is configured to maintain the display device in said standby mode for said prevention of energising of the image display component.

3. A display device according to claim 2, wherein said standby mode is **characterised by** substantially only said processing means being energised.

4. A display device according to claim 1, 2 or 3, wherein the first memory (7) is an EEPROM.

5. A display device according to any preceding claim, wherein the processing means (3) is configured to be operable, in the event that said data and said information do not match, to receive replacement control data and replacement identification information data from a source external to the display device and store said replacement data in the first memory (7).

6. A display device according to any preceding claim, wherein the processing means is a microcomputer (3) which includes the second memory (5).

7. A method of operating a display device having an image display component, the method comprising:
detecting energising of the display device;
responding to detected energising of the display device by performing a memory test; and
preventing energising of the image display component in the event that said memory test is failed,
**characterised in that**:-
the memory test comprises comparing data in an identification information location of a first, non-volatile, rewritable memory (7) in the display device, which was stored contemporaneously with control data in the first memory, with reference identification information in a second, read-only memory (5) in the display device and said test is failed if said data and said information do not match.

8. A method according to claim 7, comprising loading replacement control data and identification information into the first memory (7) in the event that said data and said information do not match.

9. A method according to claim 7 or 8, generating a warning indicating an error if said test is failed.

## Patentansprüche

1. Anzeigevorrichtung mit einer Bildanzeigekomponente und einer Steuerelektronik für die Bildanzeigekomponente, die einen ersten, energieunabhängigen, wiederbeschreibbaren Speicher (7) zum Speichern von Steuerdaten, einen zweiten Nur-Lese-Speicher (5) und eine Verarbeitungseinrichtung (3) zum Steuern der Bildanzeigekomponente in Abhängigkeit der Steuerdaten im ersten Speicher (7) aufweist,
**dadurch gekennzeichnet, dass**
der zweite Speicher (5) Bezugs-Identifikationsinformationen speichert und die Verarbeitungseinrichtung (3) so konfiguriert ist, dass sie auf das Einschalten der Anzeigevorrichtung reagiert, um die Daten in einer Identifikationsinformations-Speicherstelle im ersten Speicher (7), die beim Einschalten der Anzeigevorrichtung vorhanden sind, mit den Bezugs-Identifikationsinformationer zu vergleichen und für den Fall, dass die Identifikationsdaten und Informationen nicht übereinstimmen, das Einschalten der Bildanzeigekomponente verhindert.

2. Anzeigevorrichtung nach Anspruch 1, die in einem Bereitschaftsmodus und in einem Arbeitsmodus betrieben werden kann, wobei die Verarbeitungseinrichtung so konfiguriert ist, dass sie die Anzeigevorrichtung in dem Bereitschaftsmodus zur Verhinderung des Einschaltens der Bildanzeigekomponente hält.

3. Anzeigevorrichtung nach Anspruch 2, wobei der Bereitschaftsmodus **dadurch gekennzeichnet ist, dass** im Wesentlichen nur die Verarbeitungseinrichtung eingeschaltet ist.

4. Anzeigevorrichtung nach Anspruch 1, 2 oder 3, wobei der erste Speicher (7) ein EEPROM (electrically erasable programmable read-olny-memory für mehrfach programmierbarer Nur-Lese-Speicher) ist.

5. Anzeigevorrichtung nach einem der vorhergehenden Ansprüche, wobei die Verarbeitungseinrichtung (3) so konfiguriert ist, dass sie in dem Fall, dass die Daten und die Informationen nicht übereinstimmen, Ersatz-Steuerdaten und Ersatz-Identifikationsinformationsdaten von einer für die Anzeigevorrichtung externen Quelle empfangen und die Ersatz-Daten im ersten Speicher (7) speichern kann.

6. Anzeigevorrichtung nach einem der vorhergehenden Ansprüche, wobei die Verarbeitungseinrichtung ein Mikrocomputer (3) ist, der den zweiten Speicher (5) aufweist.

7. Verfahren zum Betreiben einer Anzeigevorrichtung mit einer Bildanzeigekomponente, wobei das Verfahren umfasst:
- Erfassen des Einschaltens der Anzeigevorrichtung;
- Reagieren auf das erfasste Einschalten der Anzeigevorrichtung durch Durchführen eines Speichertests; und
- Verhindern des Einschaltens der Bildanzeigekomponente in dem Fall, dass der Speichertest fehlgeschlagen ist,
**dadurch gekennzeichnet, dass**
der Speichertest das Vergleichen von Daten in einer Identifikationsinformations-Speicherstelle eines ersten, energieunabhängigen, wiederbeschreibbaren Speichers (7) in der Anzeigevorrichtung, die gleichzeitig mit Steuerdaten im ersten Speicher gespeichert wurden, mit Bezugs-Identifikationsinformationen in einem zweiten Nur-Lese-Speicher (5) in der Anzeigevorrichtung umfasst, wobei der Test fehlgeschlagen ist, wenn die Daten und die Informationen nicht übereinstimmen.

8. Verfahren nach Anspruch 7, das das Laden von Ersatz-Steuerdaten und Identifikationsinformationen in den ersten Speicher (7) in dem Fall umfasst, dass die Daten und die Informationen nicht übereinstimmen.

9. Verfahren nach Anspruch 7 oder 8, wobei eine Wammeldung erzeugt wird, die einen Fehler anzeigt, wenn der Test fehlgeschlagen ist.

## Revendications

1. Dispositif d'affichage comprenant un composant d'affichage d'image et un circuit de commande pour le composant d'affichage d'image, comprenant une première mémoire (7) réinscriptible, non volatile, pour stocker des données de commande, une deuxième mémoire à lecture seule (5), et des moyens de traitement (3) pour commander le composant d'affichage d'image selon des données de commande situées dans la première mémoire (7), **caractérisé en ce que** la deuxième mémoire (5) stocke une information d'identification de référence et les moyens de traitement (3) sont configurés pour réagir à l'actionnement du dispositif d'affichage, pour comparer les données situées dans un emplacement d'information d'identification dans la première mémoire (7), existant à l'actionnement du dispositif d'affichage, à ladite information d'identification de référence et, dans le cas où lesdites données d'identification et ladite information ne coïncident pas, empêcher l'actionnement du composant d'affichage d'image.

2. Dispositif d'affichage selon la revendication 1, susceptible de fonctionner en mode d'attente et en un mode de fonctionnement, dans lequel les moyens de traitement sont configurés pour maintenir le dispositif d'affichage audit mode d'attente pour ledit empêchement d'actionnement du composant d'affichage d'image.

3. Dispositif d'affichage selon la revendication 2, dans lequel ledit mode d'attente est **caractérisé par** l'actionnement pratiquement uniquement desdits moyens de traitement.

4. Dispositif d'affichage selon la revendication 1, 2 ou 3, dans lequel la première mémoire (7) est une EEPROM.

5. Dispositif d'affichage selon l'une quelconque des revendications précédentes, dans lequel les moyens de traitement (3) sont configurés pour pouvoir fonctionner dans le cas où lesdites données et ladite information ne coïncident pas, pour recevoir des données de commande de remplacement et des données d'information d'identification de remplacement, provenant d'une source externe au dispositif d'affichage, et pour stocker lesdites données de remplacement dans la première mémoire (7).

6. Dispositif d'affichage selon l'une quelconque des revendications précédentes, dans lequel les moyens de traitement sont un micro ordinateur (3), comprenant la deuxième mémoire (5).

7. Procédé de fonctionnement d'un dispositif d'affichage comprenant un composant d'affichage d'image, le procédé comprenant :
la détection de l'actionnement du dispositif d'affichage ;
la réponse à l'actionnement, détecté, du dispositif d'affichage en accomplissant un test de mémoire ; et
l'empêchement de l'actionnement du composant d'affichage d'image dans le cas où ladite mémoire est défaillante,
**caractérisé en ce que** :
le test de mémoire comprend la comparaison de données, situées en un emplacement d'information d'identification d'une première mémoire (7) réinscriptible, non volatile, dans le dispositif d'affichage, ayant été stockée simultanément à des données de commande dans la première mémoire, à une information d'identification de référence, située dans une deuxième mémoire à lecture seule (5) dans le dispositif d'affichage, et ledit test échoue si lesdites données et ladite information ne coïncident pas.

8. Procédé selon la revendication 7, comprenant le chargement de données de commande de remplacement et d'une information d'identification dans la première mémoire (7), dans le cas où lesdites données et ladite information ne coïncident pas.

9. Procédé selon la revendication 7 ou 8, générant un avertissement, indiquant qu'il y a une erreur s'il y a échec dudit test.
